# EUROPÄISCHE PATENTSCHRIFT

(11) **EP 2 044 754 B1**
(45) Veröffentlichungstag und Bekanntmachung des Hinweises auf die Patenterteilung: **06.09.2017**
(21) Anmeldenummer: 07802399.1
(22) Anmeldetag: 24.07.2007
(51) Int. Cl.: H04L 29/08

(54) **VERFAHREN ZUM BEREITSTELLEN ZUSAMMENGESETZTER DIENSTE IN EINEM PEER-TO-PEER-NETZWERK**
METHOD FOR PROVIDING COMBINED SERVICES IN A PEER-TO-PEER NETWORK
PROCÉDÉ POUR FOURNIR DES SERVICES COMBINÉS DANS UN RÉSEAU POSTE À POSTE

(30) Priorität: 25.07.2006 EP 06015487; 06.09.2006 DE 102006041868
(43) Veröffentlichungstag der Anmeldung: 08.04.2009
(73) Patentinhaber: Unify GmbH & Co. KG, 80807 München (DE)
(72) Erfinder: GERDES, Christoph, 81667 München (DE); PRINZ, Vivian, 80798 München (DE); SOUTHALL, Alan, 69190 Walldorf (DE)
(74) Vertreter: Fritzsche, Thomas
(86) Internationale Anmeldenummer: PCT/EP2007/057615
(87) Internationale Veröffentlichungsnummer: WO 2008/012305

(56) Entgegenhaltungen:
- EP-A- 1 431 875
- US-A1- 2004 148 326
- ANKOLEKAR A ET AL: "DAML-S: Web Service description for the Semantic Web" LECTURE NOTES IN COMPUTER SCIENCE, SPRINGER VERLAG, BERLIN, DE, Bd. 2342, 9. Juni 2002 (2002-06-09), Seiten 348-363, XP002276131 ISSN: 0302-9743

## Beschreibung

Die vorliegende Erfindung betrifft ein Verfahren zum Bereitstellen eines aus Teildiensten zusammengesetzten Dienstes in einem Peer-Einrichtungen aufweisenden Peer-to-Peer-Netzwerk.

Mit Peer-to-Peer-Systemen ist es möglich, eine Vielzahl von Geräten, die im Folgenden als Peer-Einrichtungen bezeichnet werden, miteinander zu vernetzen. Die Kommunikation zwischen den Peer-Einrichtungen erfolgt dabei über das Protokoll eines Kommunikationsnetzwerkes, beispielsweise dem Internet. Die an dem Peer-to-Peer-Netzwerk teilnehmenden Peer-Einrichtungen können dabei bestimmte Dienste anbieten, wie z. B. die automatische Übersetzung eines Textes. Durch Peer-to-Peer-Netzwerke ist es möglich, ein netzweites Ressourcen- oder Dienst-Sharing zu ermöglichen, ohne zentrale Infrastrukturen wie zentrale Servereinrichtungen, einsetzen zu müssen.

Da in derartigen Peer-to-Peer-Netzwerken die Peer-Einrichtungen in der Regel sehr spezielle Dienste anbieten, ist eine Komposition von Teildiensten zur Realisierung von komplexen Diensten erwünscht. Dies kann beispielsweise durch eine Verkettung von einfachen Teildiensten erfolgen. Es ist beispielsweise denkbar, dass eine Textchat-Applikation, auf die von einem PDA (Personal Digital Assistant) aus zugegriffen wird, auf eine Sprachausgabe umgelenkt werden soll. Dies kann beispielsweise notwendig sein, wenn der Nutzer des PDAs ein Kraftfahrzeug auf der Straße führt. Es ist ferner denkbar, dass ein automatischer Übersetzungsdienst der Sprachausgabe vorgeschaltet ist, um den Textchat zunächst in die Muttersprache des Nutzers zu übersetzen. Die Verkettung der Teildienste Textchat, automatische Übersetzung und Text-zu-Sprachausgabe realisieren so einen dynamisch zusammengesetzten Dienst, wobei die Teildienste von verschiedenen Peer-Einrichtungen des Netzwerkes ausgeführt werden können.

Da ein Peer-to-Peer-Netzwerk allerdings durch Ausfall einzelner Peers und Hinzutreten von neuen Peer-Einrichtungen ein dynamisches System darstellt, kann die Bereitstellung von derartig zusammengesetzten Diensten durch Rückgriff auf die angebotenen Dienste der einzelnen Peers problematisch sein. Es ist dabei eine vollständig dezentrale Verwaltung der Zusammenstellung eines komplexen Dienstes aus Teildiensten notwendig, wobei auch das kontinuierliche An- und Abmelden einzelner Peer-Einrichtungen am Peer-to-Peer-Netzwerk berücksichtigt wird.

Bei Ausfall eines Peers, der einen Teildienst in der jeweiligen komplexen Dienstzusammenstellung ausführt, ist erwünscht, dass der komplexe Dienst dennoch weiterhin angeboten werden kann und der ausgefallene Teildienst von einem weiteren Peer übernommen wird.

Es ist ferner wünschenswert, dass eine für die Ausführung des komplexen zusammengesetzten Dienstes benötigte Rechenleistung günstig auf die Teildienste anbietenden Peer-Einrichtungen aufgeteilt wird, ohne auf zentrale Performance-Informationen der einzelnen Peer-Einrichtungen zugreifen zu müssen. Ein besonderes Problem besteht somit darin, die Auswahl der Peer-Einrichtungen für einen vorgegebenen Teildienst günstig zu treffen. Der Aufbau bzw. die Bereitstellung des jeweiligen zusammengesetzten Dienstes aus Teildiensten muss zudem zügig auch bei großen Peer-to-Peer-Netzwerken erfolgen können.

In der Vergangenheit sind z. B. Ansätze verfolgt worden, bei denen zunächst von einem einen komplexen zusammengesetzten Dienst anfragenden Peer alle möglichen Dienstpfade, also die Verkettung von Teildiensten, welche durch unterschiedliche Peer-Einrichtungen ausgeführt werden, zu erkennen und hinsichtlich ihrer Leistungsfähigkeit zu bewerten. Der beste Dienstpfad, also die leistungsfähigste Verkettung der auf einem jeweiligen Peer ausgeführten Teildienste zu dem gesamten zusammengesetzten Dienst wird dann ausgewählt.

Dieser Ansatz ist durch die hohe Zahl von möglichen Dienste anbietenden Peer-Einrichtungen sehr aufwändig und erfordert eine lange Initialisierungszeit bis eine tatsächliche Abarbeitung bzw. Bereitstellung des zusammengesetzten Dienstes erfolgen kann. Deterministische Algorithmen zum Auffinden des optimalen Dienstpfades benötigen dabei exponentiell viel Zeit in der Anzahl im Peer-to-Peer-Netz vorhandenen Peer-Einrichtungen.

In Ankolekar, A. et al: LECTURE NOTES IN COMPUTER SCIENCE, SPRINGER VERLAG BERLIN, DE, Vol. 2342, June 9, 2002, pp. 348-363 ist eine Beschreibungssprache für Dienste im semantischen Web mit möglichen Eigenschaften eines einzelnen Webdienstes offenbart. Webdienste sind Programme oder Einrichtungen, die durch das Internet kontaktiert werden können.

In US 2004/0148326 A1 ist ein Adressermittlungsverfahren in einer Peer-to-Peer-Netzwerkumgebung beschrieben, bei dem Peer-Einrichtungen ihre Netzwerkressourcen wie Rechenleistung, Speicher oder Vermittlungsdienste anderen Peer-Einrichtungen im Netzwerk in Peer-Gruppen anbieten können. Auf diese Weise erfolgt ein verteiltes Rechnen in dem Peer-to-Peer-Netzwerk, wobei Redundanz derart zur Verfügung gestellt wird, dass die dynamische Natur des Netzwerks die Ergebnisse nicht beeinflusst.

Es ist daher eine Aufgabe der vorliegenden Erfindung, ein Verfahren zum Bereitstellen eines aus Teildiensten zusammengesetzten Dienstes in einem Peer-to-Peer-Netzwerk mit Peer-Einrichtungen zu schaffen, das eine rasche Initialisierung und zuverlässige Ausführung des zusammengesetzten Dienstes ermöglicht.

Diese Aufgabe wird durch ein Verfahren zum Bereitstellen eines aus Teildiensten zusammengesetzten Dienstes gemäß Patentanspruch 1 gelöst.

Demgemäß ist ein Verfahren zum Bereitstellen eines aus verketteten, nacheinander durchzuführenden Teildiensten zusammengesetzten Dienstes in einem Peer-Einrichtungen aufweisenden Peer-to-Peer-Netzwerk vorgesehen, wobei die Peer-Einrichtungen jeweils Gruppen zuordenbar sind. Dabei ist jede Gruppe durch einen vorgegebenen Teildienst bestimmt und durch jede einer jeweiligen Gruppe zugeordneten Peer-Einrichtung ist der vorgegebene Teildienst ausführbar. Eine ausgewählte Peer-Einrichtung einer Gruppe führt dabei den jeweiligen Teildienst aus. Dabei wird von einer den zusammengesetzten Dienst anfragenden Peer-Einrichtung eine Abfolge von auszuführenden Teildiensten und Vorgaben an die den jeweiligen Teildienst ausführenden Peer-Einrichtungen in dem Peer-to-Peer-Netzwerk publiziert. Die Auswahl der ausgewählten Peer-Einrichtungen erfolgt dabei in Abhängigkeit von der publizierten Abfolge und den publizierten Vorgaben. Zum Initialisieren des zusammengesetzten Dienstes werden die folgenden Verfahrensschritte durchgeführt: a) Publizieren einer ComposedServiceResource, welche die Abfolge der für die Ausführung des zusammengesetzten Dienstes verwendeten Teildienste, insbesondere Kriterien für die Auswahl der ausführenden Peer-Einrichtungen, eine Verkettung der Teildienste und Ausführungsparameter für die Teildienste, aufweist; b) Publizieren einer SubtaskResource zum Anfragen des in der Abfolge der Teildienste zuletzt auszuführenden Teildienstes durch die den zusammengesetzten Dienst anfragende Peer-Einrichtung, wobei eine Identifikation der den Teildienst anfragenden Peer-Einrichtung als Übergabe-Peer-Einrichtung für ein Teildienstergebnis von dem angefragten Teildienst in die SubtaskResource geschrieben wird, und Auswählen der Peer-Einrichtung der Gruppe, welche den angefragten Teildienst auszuführen hat; und c) Publizieren von weiteren SubtaskResourcen zum Anfragen des jeweils in der Abfolge der Teildienste vorhergehend auszuführenden Teildienstes durch die ausgewählte Peer-Einrichtung, welche den in der Abfolge der Teildienste jeweils nachfolgend auszuführenden Teildienst ausführt, wobei eine Identifikation der den Teildienst anfragenden Peer-Einrichtung als Übergabe-Peer-Einrichtung für ein Teildienstergebnis von dem angefragten Teildienst in die SubtaskResource geschrieben wird, und Auswählen der Peer-Einrichtung der Gruppe, welche den angefragten Teildienst auszuführen hat.

Unter Publizieren wird dabei die verteilte Speicherung von Informationen in dem zugrunde liegenden Peer-to-Peer-Netzwerk verstanden. Es wird auch davon ausgegangen, dass das zugrunde liegende Peer-to-Peer-Netzwerk das verteilte Speichern und Wiederauffinden von Informationen gestattet bzw. ein entsprechendes Kommunikationsprotokoll für die das Peer-to-Peer-Netzwerk bildenden Peer-Einrichtungen vorliegt. Die abgespeicherten Informationen werden auch allgemein als Ressourcen bezeichnet und die verteilte Speicherung als das Publizieren von Ressourcen.

Gemäß der Erfindung müssen nicht alle möglichen Dienstpfade oder Verkettungen von Peer-Einrichtungen und der durch die Peer-Einrichtungen ausgeführten Teildienste betrachtet werden. Vielmehr werden alle vorliegenden Peer-Einrichtungen logischen Gruppen zugeordnet, welche durch den jeweiligen Teildienst charakterisiert sind. Es ergibt sich dadurch eine lineare Dienstzusammensetzung aus Teildiensten durch die Dienstgruppen. Dabei bezeichnet Dienstgruppe die Anzahl von Peer-Einrichtungen, die prinzipiell in der Lage sind, einen vorgegebenen Teildienst auszuführen. Für die Initialisierung des zusammengesetzten Dienstes und dessen Ausführung ist organisatorisch lediglich eine Verkettung der Gruppen durchzuführen, was erheblich aufwandsgünstiger und zeitlich schneller geschehen kann.

Vorzugsweise werden zum Bilden einer jeweiligen Gruppe die folgenden Verfahrensschritte durchgeführt:
- Publizieren einer CandidateResource durch die Peer-Einrichtungen, wobei die CandidateResource Informationen über die von der jeweiligen publizierenden Peer-Einrichtung ausführbaren Teildienste und die Leistungsfähigkeit der jeweiligen publizierenden Peer-Einrichtung aufweist;
- Publizieren einer SubtaskResource, welche Informationen über mindestens einen der auszuführenden Teildienste und die zugehörigen Vorgaben aufweist; und
- Auswählen der ausführenden Peer-Einrichtung aus der Gruppe von Peer-Einrichtungen, mittels derer ein vorgegebener Teildienst ausführbar ist, in Abhängigkeit von der Leistungsfähigkeit und den publizierten Vorgaben an die den jeweiligen Teildienst.

Durch das verteilte Speichern der CandidateResource, welche beispielsweise eine Liste derjenigen Teildienste aufweist, die von dem publizierenden Peer ausgeführt werden können, ist eine Einordnung aller Peer-Einrichtungen in logische Gruppen möglich. Dabei ist eine jeweilige logische Gruppe durch die Funktion eines Teildienstes definiert. Eine entsprechende Gruppe oder Dienstgruppe umfasst dann alle Peer-Einrichtungen, die einen betreffenden Teildienst ausführen können.

Ferner enthalten die publizierten CandidateResources Angaben über die jeweilige Leistungsfähigkeit der publizierenden Peer-Einrichtung, wie z. B. eine Bandbreite, bereitstehender Speicherplatz oder CPU-Leistung.

Durch Publizieren der SubtaskResource ergibt sich dann die Gruppenzugehörigkeit der Peer-Einrichtungen und erlaubt ferner die Peer-Einrichtungen einer Gruppe hinsichtlich ihrer Leistungsfähigkeit zu ordnen. Es kann die leistungsfähigste Peer-Einrichtung einer Gruppe ausgewählt werden, um den Teildienst tatsächlich auszuführen. Die mit der SubtaskResource publizierten Vorgaben an die jeweiligen Teildienst ausführenden Peer-Einrichtungen werden z. B. in einer so genannten Komparatorklasse spezifiziert. Dabei enthält die Komparatorklasse Vergleichsregeln, die bei der Auswahl der ausführenden Peer-Einrichtung berücksichtigt werden. Falls beispielsweise für einen Teildienst eine besonders hohe Bandbreite benötigt wird, ist in der Komparatorklasse die Bandbreite als Vergleichsregel unter den der Gruppe zugewiesenen Peers angegeben. Falls dann mehrere Peer-Einrichtungen dieselbe Bandbreite aufweisen, kann in einer weiteren Spezifizierung durch eine weitere untergeordnete Komparatorklasse, beispielsweise auf die CPU-Leistung bezogen, verwendet werden.

Vorzugsweise wird mindestens eine Watchdog-Peer-Einrichtung aus einer jeweiligen Gruppe von Peer-Einrichtungen bestimmt, wobei die Watchdog-Peer-Einrichtung eine Funktion oder Funktionsfähigkeit der den jeweiligen Teildienst ausführenden und ausgewählten Peer-Einrichtung überwacht. Dies kann z. B. durch den Austausch von so genannten Herzschlag- (Heart Beat) Nachrichten geschehen, die von dem ausführenden Peer an die Watchdog-Peer-Einrichtungen derselben Gruppe gesendet werden. Somit können die Watchdog-Peers einer Gruppe beurteilen, ob der ausführende Peer zuverlässig Teildienstergebnisse bereitstellt und seine Funktionsfähigkeit unbeeinträchtigt ist. Falls der zunächst ausführende Peer ausfällt, übernimmt eine der Watchdog-Peer-Einrichtungen die Ausführung des Teildienstes.

Vorzugsweise wird eine ServiceGroupResource für eine jeweilige Gruppe publiziert, welche Informationen über die aktuelle den Teildienst ausführende, ausgewählte Peer-Einrichtung und/oder die bestimmten Watchdog-Peer-Einrichtungen aufweist. Diese als Zustands-Resource bezeichnete ServiceGroupResource speichert regelmäßig den Zustand, beispielsweise Zwischenergebnisse der Teildienstausführung sowie die Struktur der Gruppe. D. h. die ServiceGroupResource enthält immer aktuelle Informationen über den jeweiligen ausführenden Peer und die überwachende Watchdog-Peer-Einrichtungen. Fällt beispielsweise die zunächst ausführende Peer-Einrichtung aus, liest der am besten bewertete, also nächstleistungsfähigste Watchdog-Peer für die Ausführung des betreffenden Teildienstes die ServiceGroupResource aus und übernimmt die Ausführung des Teildienstes unter Verwendung beispielsweise der Zwischenergebnisse aus der
ServiceGroupResource.

Das Publizieren der SubtaskResource, das Auswählen der den jeweiligen Teildienst ausführenden Peer-Einrichtung und/oder das Bestimmen der Watchdog-Peereinrichtungen erfolgt vorzugsweise durch eine den jeweiligen Teildienst anfragende Peer-Einrichtung. Die Beauftragung zur Ausführung des angefragten Teildienstes wird daher zunächst von einer als koordinierenden Peer-Einrichtung bezeichneten Peer-Einrichtung durchgeführt.

Zum Initialisieren des zusammengesetzten Dienstes werden erfindungsgemäß die folgenden Verfahrensschritte durchgeführt:
- Publizieren einer ComposedServiceResource, welche die Abfolge der für die Ausführung des zusammengesetzten Dienstes verwendeten Teildienste, insbesondere Kriterien für die Auswahl der ausführenden Peer-Einrichtungen, eine Verkettung der Teildienste und Ausführungsparameter für die Teildienste, aufweist;
- Publizieren einer SubtaskResource zum Anfragen des in der Abfolge der Teildienste zuletzt auszuführenden Teildienstes durch die den zusammengesetzten Dienst anfragende Peer-Einrichtung, wobei eine Identifikation der den Teildienst anfragenden Peer-Einrichtung als Übergabe-Peer-Einrichtung für ein Teildienstergebnis von dem angefragten Teildienst in die SubtaskResource geschrieben wird, und Auswählen der Peer-Einrichtung der Gruppe, welche den angefragten Teildienst auszuführen hat; und
- Publizieren von weiteren SubtaskResourcen zum Anfragen des jeweils in der Abfolge der Teildienste vorhergehend auszuführenden Teildienstes durch die ausgewählte Peer-Einrichtung, welche den in der Abfolge der Teildienste jeweils nachfolgend auszuführenden Teildienst ausführt, wobei eine Identifikation der den Teildienst anfragenden Peer-Einrichtung als Übergabe-Peer-Einrichtung für ein Teildienstergebnis von dem angefragten Teildienst in die SubtaskResource geschrieben wird, und Auswählen der Peer-Einrichtung der Gruppe, welche den angefragten Teildienst auszuführen hat.

Nachdem die einzelnen Dienstgruppen, also die Ausführung der Teildienste durch die Gruppenzuordnung zuverlässig vorliegt, erfolgt eine Verknüpfung oder Verkettung der Teildienste untereinander durch das sequentielle Publizieren von SubtaskResourcen. Das Vorliegen eines zusammengesetzten Dienstes in dem Peer-to-Peer-Netzwerk wird in Form der ComposedServiceResource publiziert.

Falls ein zusammengesetzter Dienst von einer anfragenden Peer-Einrichtung benötigt wird, liest diese die ComposedServiceResource. In der ComposedServiceResource sind beispielsweise alle Teildienste des zusammengesetzten Dienstes sowie zugehörige Parameter, wie benötigte Leistungs-Ressourcen oder Dienstgüte-Parameter abgelegt. Die den zusammengesetzten Dienst anfragende Peer-Einrichtung kann auch selbst eine ComposedServiceResource publizieren, in der alle Teildienste und benötigten Parameter spezifiziert sind.

Der den zusammengesetzten Dienst anfragende Peer publiziert zunächst die SubtaskResource für den zuletzt auszuführenden Teildienst in der Dienstkette. Das Teildienstergebnis dieses zuletzt auszuführenden Dienstes wird in der Ausführung des gesamten zusammengesetzten Dienstes dem anfragenden Peer übergeben. Dieser den zusammengesetzten Dienst anfragende Peer koordiniert auch die Gruppenstruktur der durch den zuvor auszuführenden Teildienst bestimmten Gruppe von Peer-Einrichtungen. Die damit bestimmte ausführende Peer-Einrichtung publiziert dann eine SubtaskResource für den jeweils zuvor auszuführenden Teildienst.

Diese Verkettung der Teildienste oder der durch die Teildienste bestimmten Gruppen erfolgt, bis der zuerst in der Dienstkette auszuführende Teildienst entsprechend seiner SubtaskResource bereitgestellt wurde. Damit sind durch die Initialisierung alle die Teildienste ausführenden Peer-Einrichtungen ausgewählt und entsprechende ServiceGroupResources mit den Gruppenstrukturinformationen bekannt.

In die SubtaskResourcen können vorzugsweise Informationen über die Anforderungen an die jeweiligen Teildienste, die Verkettung der Teildienste untereinander und insbesondere Identifikatoren der ComposedServiceResourcen geschrieben werden. Ein Identifikator ermöglicht den direkten Zugriff auf die entsprechende Ressource. Dabei ist besonders vorteilhaft, dass der Identifikator der ComposedServiceResource für den jeweils nachfolgenden Teildienst einer vorliegenden SubtaskResource gespeichert wird. Denkbar ist auch, dass die in der ComposedServiceResource abgelegten Informationen über die Verkettung der Teildienste über die Publizierung der SubtaskResourcen an alle ausführenden Peer-Einrichtungen für die Teildienste weitergegeben werden.

Nach dem Auswählen der Peer-Einrichtung, welche den in der Abfolge der Teildienste den ersten Teildienst auszuführen hat, wird vorzugsweise eine Initialisierungsnachricht an die den zusammengesetzten Dienst anfragende Peer-Einrichtung gesendet. Damit erkennt die erste, also die den zusammengesetzten Dienst anfragende Peer-Einrichtung, dass eine Verkettung aller Teildienste erfolgreich durchgeführt wurde. Den Zustand der den zusammengesetzten Dienst bildenden Teildienste und/oder auch Zwischenergebnisse dieser Teildienste können durch die den zusammengesetzten Dienst anfragende Peer-Einrichtung mittels einer ComposedServiceStateResource publiziert werden.

Bevorzugt wird nach dem Auswählen aller die jeweiligen Teildienste ausführenden Peer-Einrichtungen eine Ring-Nachricht von der den zusammengesetzten Dienst anfragenden Peer-Einrichtung an die ausgewählte Peer-Einrichtung gesendet, welche den in der Abfolge zuerst auszuführenden Teildienst ausführt, welche dann an die in der Abfolge folgenden Teildienste ausführenden Peer-Einrichtungen die Ring-Nachricht weitersendet, wodurch diese an die den zusammengesetzten Dienst anfragenden Peer-Einrichtung zurückgesendet wird. Dadurch werden die den zusammengesetzten Dienst durch ihre Teildienstausführung bildenden Peer-Einrichtungen instantiiert. Bevorzugt wird die Ring-Nachricht in regelmäßigen Abständen zur Überwachung der Ausführung des zusammengesetzten Dienstes gesendet, um beispielsweise die zuverlässige Ausführung und das Vorliegen aller Teildienste zu kontrollieren. Ein entsprechendes Ergebnis kann z. B. in der ComposedServiceStateResource aktualisiert werden.

Beim Übertragen der Ring-Nachricht ermittelt eine jeweilige ausführende Peer-Einrichtung die Identifikation der Peer-Einrichtung, welche den in der Abfolge den nachfolgenden Teildienst ausführt, vorzugsweise durch Auslesen der ServiceGroupResource der jeweiligen durch den nachfolgenden Teildienst bestimmten Gruppe. Da in der jeweiligen ServiceGroupResource die Gruppenstruktur abgelegt ist, kann durch Auslesen auch eine Identifikation oder Adresse der jeweiligen ausführenden Peer-Einrichtung bezogen werden.

In einer Variante des Verfahrens werden in der ComposedServiceResource optionale Teildienste markiert, welche bei der Ausführung der verketteten Teildienste übersprungen werden können. Es ist beispielsweise denkbar, dass alle Peer-Einrichtungen einer durch einen Teildienst bestimmten Gruppe ausfallen und die Kette von Teildiensten unterbrochen würde. Ist ein derartiger Teildienst als optional markiert, kann dieser in der Ausführung übersprungen werden.

Ein markierter optionaler Teildienst in der Abfolge der auszuführenden Teildienste wird dann übersprungen, falls alle Peer-Einrichtungen der durch den optionalen Teildienst bestimmten Gruppe ausfallen. Dabei übermittelt die ausführende Peer-Einrichtung, welche den in der Abfolge vor dem zu überspringenden Teildienst liegenden Teildienst ausführt, ihr Teildienstergebnis an die ausführende Peer-Einrichtung, welche den in der Abfolge nach dem zu überspringenden Teildienst liegenden Teildienst ausführt. Dabei ist es möglich, dass eine ausführende Peer-Einrichtung bei einem Ausfall des ihr folgenden Teildienstes die jeweilige ComposedServiceResource liest und eine Identifikation der ServiceGroupResource für die Gruppe, welche durch den in der Abfolge übernächsten Teildienst bestimmt ist, liest. Somit erkennt eine ausführende Peer-Einrichtung, deren Teildienstergebnis nicht an die optional vorgesehene Teildienst ausführende Peer-Einrichtung gesendet werden kann, weil diese ausgefallen ist, dass ihr Teildienstergebnis an die übernächste Peer-Einrichtung in der Dienstkette übermittelt werden muss.

Vorteilhafterweise wird eine jeweilige ausführende Peer-Einrichtung bei einer Änderung der ServiceGroupResource für die durch den in der Abfolge folgenden Teildienst bestimmten Gruppe automatisch benachrichtigt. Die automatische Benachrichtigung wird auch als PublishSubscribe-Mechanismus bezeichnet. Der Subscribe-Mechanismus ermöglicht dabei, dass einzelne Peer-Einrichtungen publizierte Ressourcen abonnieren oder zeichnen können. Ist eine entsprechende Zeichnung erfolgt, werden die abonnierenden oder zeichnenden Peer-Einrichtungen immer dann benachrichtigt, falls eine Ressource publiziert wird oder Änderungen an der Ressource vorgenommen wurden. Damit ist sichergestellt, dass immer die aktuellen Gruppenstrukturen bekannt sind.

Es ist ferner denkbar, dass mindestens eine Peer-Einrichtung mehreren Gruppen zuordenbar ist und als ausführende Peer-Einrichtung verschiedene Teildienste ausführt. Durch die erfindungsgemäße Überwachung der Peer-Einrichtungen durch Watchdog-Peers kann eine an mehreren Gruppen oder der Ausführung mehrerer Teildienste beteiligte Peer-Einrichtung zuverlässig überwacht werden. Es ist beispielsweise denkbar, dass eine Peer-Einrichtung abwechselnd verschiedene Teildienste ausführt.

Die Erfindung betrifft ferner ein Computerprogrammprodukt, welches die Ausführung eines entsprechenden Verfahrens zum Bereitstellen eines aus Teildiensten zusammengesetzten Dienstes in einem Peer-to-Peer-Netzwerk auf einer oder mehreren programmgesteuerten Peer-Einrichtungen veranlasst.

Weitere vorteilhafte Ausgestaltungen der Erfindung sind Gegenstand der Unteransprüche sowie der im Folgenden beschriebenen Ausführungsbeispiele.

Die Erfindung wird nun anhand einzelner Ausführungsbeispiele des Verfahrens unter Bezugnahme auf die Figuren näher erläutert.

Es zeigen dabei:
- Figur 1:: eine graphische Darstellung der Dienstgruppenbildung;
- Figur 2:: eine graphische Darstellung einer beispielhaften Gruppenstruktur;
- Figur 3:: eine graphische Darstellung der Verkettung von Teildiensten zu einem zusammengesetzten Dienst;
- Figur 4:: die Überwachung eines zusammengesetzten Dienstes mittels Ring-Nachrichten;
- Figur 5:: die Ausführung eines zusammengesetzten Dienstes bei Ausfall eines optionalen Teildienstes; und
- Figur 6:: eine mögliche Verkettung von Teildiensten bei mehreren Teildienst ausführenden Peer-Einrichtungen.

In den Figuren sind gleiche bzw. funktionsgleiche Elemente mit denselben Bezugszeichen versehen worden, sofern nichts Anderes angegeben ist.

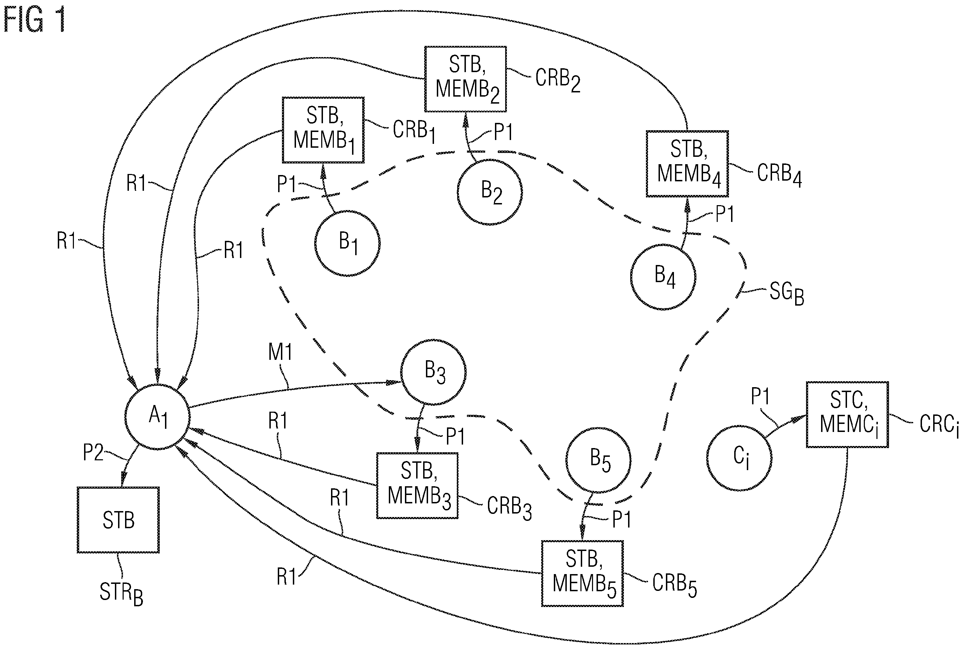

Figur 1 zeigt eine graphische Darstellung der zu einer Gruppenbildung notwendigen Publizierungs- und Zuordnungsvorgänge in einem Peer-to-Peer-Netzwerk. In der Figur 1 ist eine Auswahl von Peer-Einrichtungen A₁, B₁-B₅, Cᵢ in einem Peer-to-Peer-Netzwerk dargestellt. Die Peer-Einrichtungen können beispielsweise Dienste anbietende Computer in einem Kommunikationsnetz wie dem Internet sein. Das Peer-to-Peer-Netzwerk-Protokoll stellt eine Kommunikation zwischen den Peer-Einrichtungen bereit und lässt das verteilte Speichern von Daten oder Informationen in dem Peer-to-Peer-Netzwerk zu. Das verteilte Speichern einer Information, die auch als Ressource bezeichnet wird, wird als Publizieren bezeichnet. Für Peer-Einrichtungen sind auch die Begriffe Instanz-Endgerät oder Peer geläufig.

Jede Peer-Einrichtung A₁, B₁-B₅, Cᵢ ist dabei in der Lage, einen bestimmten oder mehrere Teildienste auszuführen. Dies kann beispielsweise die Ausführung eines Textchats, eine automatischen Übersetzung von Text, eine Spracherkennung oder eine Text-zu-Sprach-Ausgabe-Funktion sein. Jede Peer-Einrichtung A₁, B₁-B₅, Cᵢ in dem Peer-to-Peer-Netzwerk publiziert ihre CandidateResource CRB₁-CRB₅ CRC_{I}. Das Publizieren der CandidateResource CRB₁-CRB₅ CRCᵢ ist mittels der Pfeile P1 signalisiert.

In der Figur 1 wird davon ausgegangen, dass die mit B₁-B₅ bezeichneten Peer-Einrichtungen einen mit STB bezeichneten Teildienst ausführen können. Somit enthalten die publizierten CandidateResources CRB₁-CRB₅ darüber eine Information. Ferner sind in den CandidateResources CRB₁-CRB₅ Informationen über die Leistungsfähigkeit der Peer-Einrichtungen P₁-P₅ bei der Teildienstausführung des Dienstes STB angegeben. Dies kann beispielsweise der für die Teildienstausführung bereitstehende Speicherplatz MEMB₁-MEMB₅ sein.

Ähnlich publiziert die Peer-Einrichtung Cᵢ ihre CandidateResource CACᵢ, die angibt, dass die Peer-Einrichtung Cᵢ in der Lage ist, einen Teildienst STC durchzuführen. Dies kann beispielsweise eine automatische Textübersetzung sein. In der CandidateResource CRCᵢ der Peer-Einrichtung Cᵢ sind ferner weitere Merkmale betreffend die Teildienstausführung STC aufgeführt, wie eine Bandbreite oder ein Speicherplatz MEMCᵢ.

Durch Kenntnis der CandidateResources bzw. Kenntnis der Bereitschaft der in dem Peer-to-Peer-Netzwerk vorliegenden Peer-Einrichtungen bestimmte Teildienste auszuführen, besteht eine logische Gruppenzugehörigkeit jeder Peer-Einrichtung. Die Gruppe oder Dienstgruppe SGB umfasst z. B. alle in dem Peer-to-Peer-Netzwerk vorliegenden Peer-Einrichtungen, welche in der Lage sind, den Teildienst STB durchzuführen. Dies ist in der Figur 1 durch die gestrichelte Linie um die Peer-Einrichtungen B₁-B₅ angedeutet.

Figur 1 zeigt ferner eine Peer-Einrichtung A₁, welche z. B. den Teildienst STB für ihre Funktion benötigt und von dem Peer-to-Peer-Netzwerk anfragen möchte. Diese Anfrage durch die Peer-Einrichtung A₁ erfolgt z. B. durch Publizieren einer SubtaskResource STR_{B}. In der SubtaskResource STR_{B} ist festgelegt, dass der Teildienst STB benötigt wird und welche Leistungsanforderungen und Leistungsparameter für die angefragte Teildienstausführung notwendig sind. Die SubtaskResource STR_{B} enthält insbesondere Auswahlregeln, so genannte Komparatorklassen, die festlegen, nach welchen Kriterien eine zur Ausführung des Teildienstes am besten geeignete Peer-Einrichtung ausgewählt wird. Dies kann z. B. in einer ersten Vorauswahl der größte bereitstehende Speicherplatz sein, und falls mehrere Peer-Einrichtungen dieses Kriterium erfüllen, in einer zweiten Auswahlstufe die bereitgestellte CPU-Leistung. Anhand der SubtaskResource für den Teildienst STR_{B} für den Teildienst STB ist damit die beste möglichste Peer-Einrichtung bestimmbar.

Die den Teildienst anfragende Peer-Einrichtung A₁ liest dann in einem Leseschritt R1 die CandidateResources CRB der im Peer-to-Peer-Netzwerk vorliegenden Peer-Einrichtungen. Unter Verwendung der Teildienstbeschreibung STB und der Komparatorklassen in der SubtaskResource STR_{B} entscheidet diese anfragende Peer-Einrichtung A₁ beispielsweise, dass die Peer-Einrichtung B₃ als leistungsfähigste Peer-Einrichtung der Dienstgruppe SG_{B} den Teildienst STB ausführen soll und teilt dies in einer Nachricht M1 dieser mit. Ferner kann die anfragende Peer-Einrichtung A₁ oder die dann zur Ausführung des Teildienstes STB bestimmte Peer-Einrichtung B₃ so genannte Watchdog-Peer-Einrichtungen bestimmen, die die Funktion der ausführenden Peer-Einrichtung B₃ überwachen sollen.

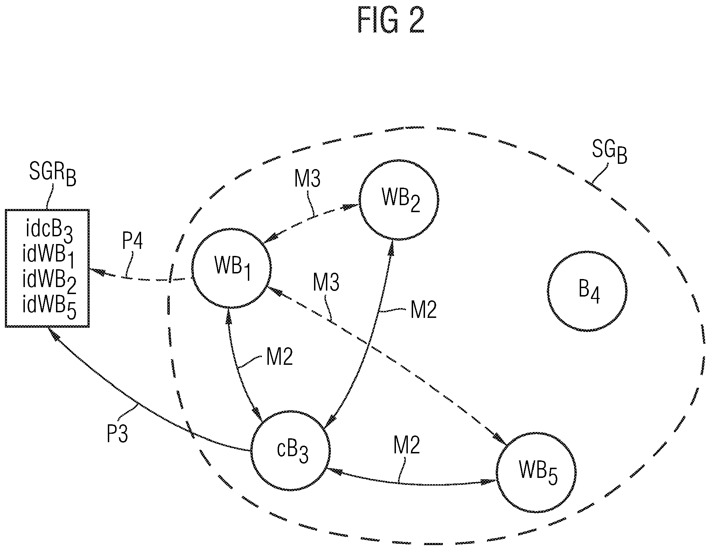

In der Figur 2 ist eine ausgebildete Gruppenstruktur schematisch dargestellt. Die Dienstgruppe SG_{B} umfasst die bereits in der Figur 1 dargestellten Peer-Einrichtungen B₁-B₅. Als die den Teildienst STB ausführende Peer-Einrichtung, welche für die Ausführung als Leistungsfähigste klassifiziert wurde, wurde die Peer-Einrichtung B₃ gewählt, welche als koordinierende Peer-Einrichtung cB₃ bezeichnet wurde. Die für die Teildienstausführung nächstleistungsfähigsten Peer-Einrichtungen B₁, B₂, B₅ wurden als Watchdog-Peer-Einrichtungen WB₁, WB₂, WB₅ bezeichnet. Die Watchdog-Peer-Einrichtungen WB₁, WB₂, WB₅ erhalten von der ausführenden oder koordinierenden Peer-Einrichtung cB₃ kontinuierlich Nachrichten M2 und überwachen somit die zuverlässige Funktion des aktuellen ausführenden Peers cB₃. Die Überwachungsnachrichten werden auch als Herzschlagnachrichten M2 bezeichnet.

Die entsprechende Gruppenstruktur wird durch Publizieren einer SerivceGroupResource SGR_{B} dokumentiert. Die jeweils koordinierende Peer-Einrichtung cB₃ initiiert das verteilte Speichern bzw. Publizieren P3 der ServiceGroupResource SGR_{B}. Diese enthält z. B. die Identifikationen der für die Service oder Dienstgruppe SG_{B} bestimmte ausführende Peer-Einrichtung idB₃ und der jeweiligen Watchdog-Peer-Einrichtungen idWB₁, idWB₂. Damit ist in der ServiceGroupResource SGR_{B} die vollständige Struktur der den Teildienst STB ausführenden Gruppe abgelegt.

Falls nun der ausführende Peer cB₃ beispielsweise durch einen Defekt ausfällt, erkennt die in der Rangfolge der Leistungsfähigkeit für die Teildienstausführung zweitbeste Watchdog-Peer-Einrichtung, beispielsweise WB₁, dies durch Ausfall der Herzschlagnachricht M2. In diesem Fall übernimmt die Watchdog-Peer-Einrichtung WB₁ die Funktion der koordinieren-Peer-Einrichtung und die Ausführung des Teildienstes STB. Ferner übermittelt die dann als koordinierende Peer-Einrichtung arbeitende Peer-Einrichtung B₁ entsprechende Nachrichten an die anderen Watchdog-Peer-Einrichtungen WB₂, WB₅ und aktualisiert durch Publizieren P4 die ServiceGroupResource SGR_{B}. Diese für den Ausfall der aktuellen koordinierenden bzw. ausführenden Peer-Einrichtung cB₃ notwendigen Maßnahmen sind durch die gestrichelten Pfeile angedeutet.

Durch die Gruppenstruktur mit Watchdog-Peers ist es damit möglich, immer zuverlässig die Ausführung eines Teildienstes zu gewährleisten. Ferner ist die Gruppenstruktur immer aktuell durch die publizierte ServiceGroupResource angegeben.

Eine Änderung der Gruppenstruktur kann auch dann notwendig sein, wenn durch Publizieren einer CandidateResource ein neuer Peer zu der Dienstgruppe SG_{B} hinzutritt und dieser eine für die Ausführung des Teildienstes günstigere Leistungsfähigkeit besitzt. Der jeweils koordinierende Peer cB₃ kann die CandidateResources der der Dienstgruppe zugeordneten Peer-Einrichtungen zeichnen bzw. abonnieren und wird damit über das Vorliegen einer besseren Peer-Einrichtung informiert. Die Bewertung der Peer-Einrichtungen hinsichtlich ihrer Leistungsfähigkeit und anhand der SubtaskResource abgelegten Komparatorklassen kann somit auch während des Betriebs, also während der Ausführung des Teildienstes, geschehen.

Eine erfindungsgemäße logische Dienstgruppe führt somit den vorgegebenen Teildienst ausfallsicher durch, und bei der Auswahl des jeweils ausführenden Peers sind Parameter wie die benötigten Ressourcen, Dienstgüten oder Nutzeranforderungen leicht zu berücksichtigen.

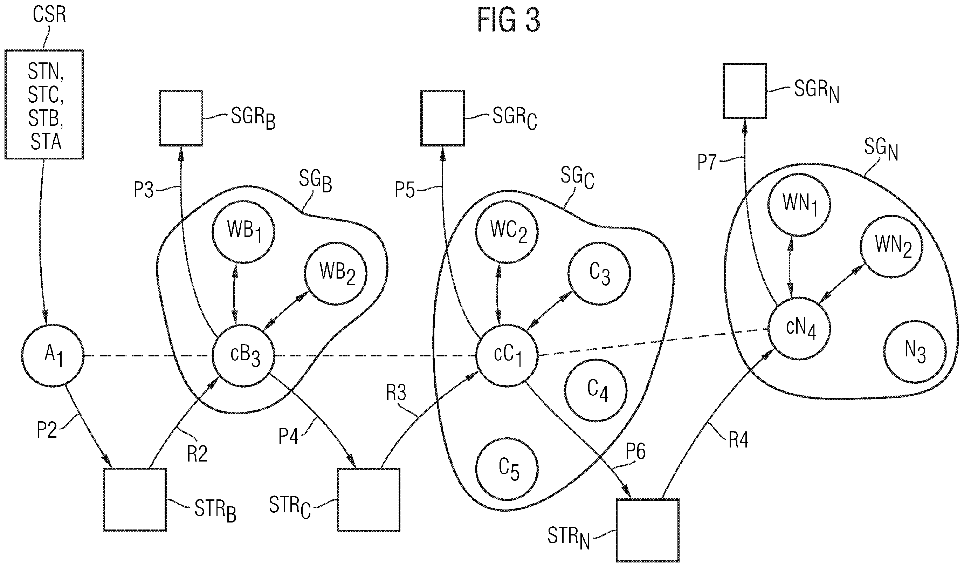

In Figur 3 ist ausgehend von der Dienstgruppenbildung für auszuführende Teildienste eine Variante des Verfahrens zum Bereitstellen eines zusammengesetzten Dienstes schematisch dargestellt. In dem betrachteten Beispiel wird davon ausgegangen, dass eine einen zusammengesetzten Dienst anfragende Peer-Einrichtung A₁ mehrere Teildienste, welche sukzessiv durchgeführt werden, benötigt.

Ein Beispiel für einen zusammengesetzten Dienst ist ein Textchat, auf den von einem PDA aus zugegriffen wird. Beispielsweise wird bei einer Autofahrt dann eine Sprachausgabe des Textchats benötigt. Insofern sind miteinander zu verkettende Teildienste die Textchat-Applikation, eine beispielsweise optionale automatische Übersetzung in eine andere Sprache, und abschließend die Sprachausgabe des übersetzten Textes. In dem betrachteten Beispiel wird mit STA die PDA-Applikation bezeichnet, mit dem Teildienst STB die Umwandlung von Text in Sprache, mit dem Teildienst STC die Übersetzung von einer Ausgangssprache in eine Zielsprache und mit Teildienst STN die Textchat-Applikation.

Eine Initiierung des zusammengesetzten Dienstes in dem Peer-to-Peer-Netzwerk erfolgt zunächst durch Lesen einer ComposedServiceResource CSR, die die für den zusammengesetzten Dienst notwendigen Teildienste aufführt, weitere Dienstgüteparameter und die Verkettung der Teildienste untereinander bestimmt. Im Folgenden ist beispielsweise eine XML-Darstellung für eine mögliche ComposedServiceResource angegeben:

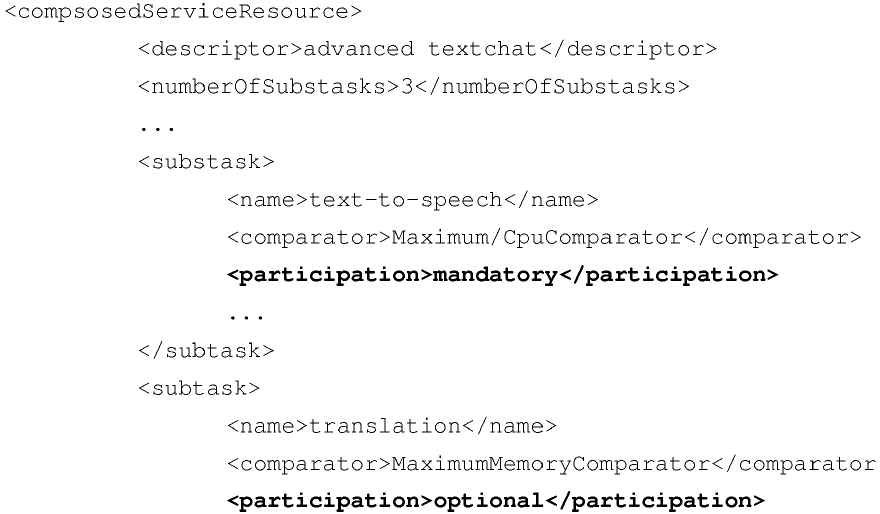

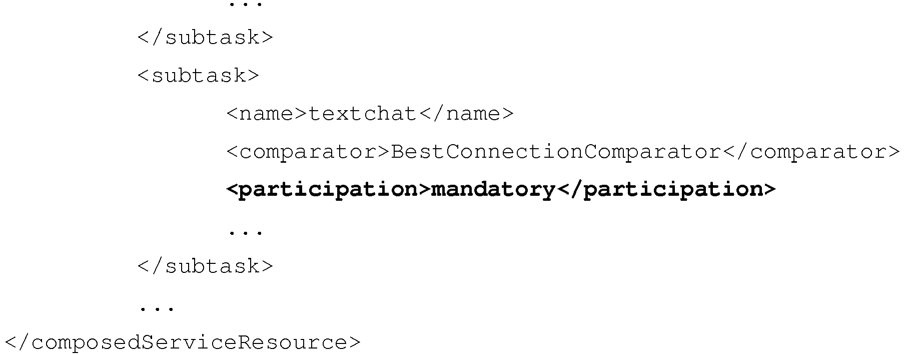

In der ComposedServiceResource CSR sind die verschiedenen Teildienste als "advanced textchat" STA, "text-to-speech" STB, "translation" STC und "textchat" STN bezeichnet. Ferner sind die Komparatorklassen bzw. Auswahlregeln für die jeweils auszuführenden Peer-Einrichtungen der Dienstgruppen hinsichtlich der CPU-Leistungsfähigkeit (Maximum-CPU-Comparator), dem Speicherplatz (Maximum-Memory-Comparator) und der Bandbreite (Best Connection-Comparator) angegeben. Darüber hinaus sind die Teildienste in optionale Teildienste, hier der Übersetzungsteildienst STC und zwingend auszuführende Teildienste, hier die Text-zu-Sprach-Ausgabe STB und der Textchat selbst STN angegeben.

Die den zusammengesetzten Dienst anfragende Peer-Einrichtung A₁ liest diese ComposedServiceResource und publiziert daraufhin die für den gemäß in der ComposedServiceResource angegebenen Abfolge von Teildiensten zuvor auszuführenden Teildienst notwendige SubtaskResource STR_{B}. Wie bereits hinsichtlich der Figuren 1 und 2 ausgeführt wurde, koordiniert die anfragende Peer-Einrichtung A₁ zunächst die Gruppenbildung SG_{B}, wodurch die Peer-Einrichtung B₃ als koordinierende bzw. als ausführende Peer-Einrichtung cB₃ bestimmt wird und die beiden Peer-Einrichtungen B₁, B₂ als Watchdog-Peer-Einrichtungen WB₁, WB₂ eingesetzt werden.

In der publizierten SubtaskResource STR_{B} sind beispielsweise alle Teildienste STN, STC, STB, STA des zusammengesetzten Dienstes sowie die Komparatorklassen enthalten. Ferner ist jeweils der Identifikator der bereits publizierten ServiceGroupResourcen, in dem hier vorliegenden Fall die ServiceGroupResource der Peer-Einrichtung A₁, abgelegt. Die den Teildienst STB ausführende Peer-Einrichtung cB₃ veröffentlicht nach erfolgreicher Gruppenkoordinierung ihre entsprechenden ServiceGroupResource SGR_{B} ihrer Gruppenstruktur.

Da der koordinierenden Peer-Einrichtung cB₃ aus der SubtaskResource STR_{B} der in der Abfolge der Teildienste zuvor auszuführende Teildienste bekannt ist, übernimmt die Peer-Einrichtung cB₃ die initiale Koordinierung für die Dienstgruppe SG_{C}. Sie veröffentlicht somit eine entsprechende SubtaskResource STR_{C} in Schritt P4 und bestimmt anhand der in der SubtaskResource STR_{C} angegebenen Komparatorklassen bzw. Vergleichskriterien die Peer-Einrichtung C₁ für die bestmögliche Ausführung des Teildienstes STC. Die aus der Dienstgruppe SGC beste Peer-Einrichtung C1 wird als ausführende Peer-Einrichtung cC₁ bezeichnet. Ferner wird wiederum eine oder mehrere Watchdog-Peer-Einrichtungen WC₂ bestimmt, und die koordinierende Peer-Einrichtung cC₁ liest die SubtaskResource STR_{C} in Schritt R3 und veröffentlicht anschließend die Gruppenstruktur in Schritt P5 als die der Dienstgruppe SGC zugewiesene ServiceGroupResource SGR_{C}.

Anschließend publiziert die ausführende Peer-Einrichtung cC₁ der Service- oder Dienstgruppe SG_{C} die SubtaskResource STR_{N} für den zuvor auszuführenden Teildienst STN in Schritt P6. Die SubtaskResource STR_{N} für die Ausführung und Bildung der durch den Teildienst STN bestimmten Dienstgruppe SG_{N} enthält nun die Identifikationen aller ServiceGroupResourcen SGR_{B} und SGR_{C}, sowie die entsprechenden Parameter für die Strukturierung der Dienstgruppe SG_{N}.

Wiederum übernimmt die ausführende Peer-Einrichtung der Folgegruppe, also die Peer-Einrichtung cC₁, die anfängliche Koordinierung der Gruppe SG_{N}. Diese bestimmt die Peer-Einrichtung N₄ als ausführende Peer-Einrichtung und die Peer-Einrichtungen N₁, N₂ als Watchdog-Peers WN₁, WN₂. Die ausführende Peer-Einrichtung cN₄ liest in Schritt R4 die SubtaskResource STR_{N} aus und publiziert nach der Entscheidung über die Watchdog-Peers in Schritt P7 eine entsprechende ServiceGroupResource SGR_{N}.

Die nunmehr zuletzt gebildete Dienstgruppe SG_{N} bzw. deren koordinierende und den Teildienst STN ausführende Peer-Einrichtung cN₄ erkennt, dass alle für den zusammengesetzten Dienst notwendigen Teildienste bzw. die ausführenden Peer-Einrichtungen cB₃, cC₁ und cN₄ bestimmt wurden. Die Verkettung der Teildienste miteinander bzw. die Verkettung der die Teildienste ausführenden Peer-Einrichtungen ist durch die gestrichelte Linie dargestellt.

Ein besonderer Vorteil dieses erfindungsgemäßen Verfahrens zum Aufbau des verketteten zusammengesetzten Dienstes aus Teildiensten STA, STB, STC, STN besteht darin, dass die initiale Koordinatorfunktionalität für die Dienstegruppenbildung auf mehrere Peer-Einrichtungen verteilt wird. Die anfragende Peer-Einrichtung A₁ übernimmt die initiale Koordination für die letzte Dienstgruppe SG_{B}. Die dann ausführende Peer-Einrichtung cB₃ der letzten Dienstgruppe übernimmt die initiale Koordination der jeweiligen Vorgängergruppe SG_{C} usw. Es ist dabei unproblematisch, dass, wenn der jeweilige Koordinator, der ausführende Peer der Folgegruppe, ausfällt. Durch die redundant vorgehaltenen Watchdog-Peers wird dennoch die weitere Funktionsfähigkeit bzw. die Ausführung des Teildienstes gewährleistet.

Sobald der zuletzt ausgewählte ausführende Peer cN₄, welcher den in der Abfolge zuerst auszuführenden Teildienst STN ausführt, bestimmt wurde, sendet dieser eine Initialisierungsnachricht INIT an den den zusammengesetzten Dienst anfragenden Peer A₁.

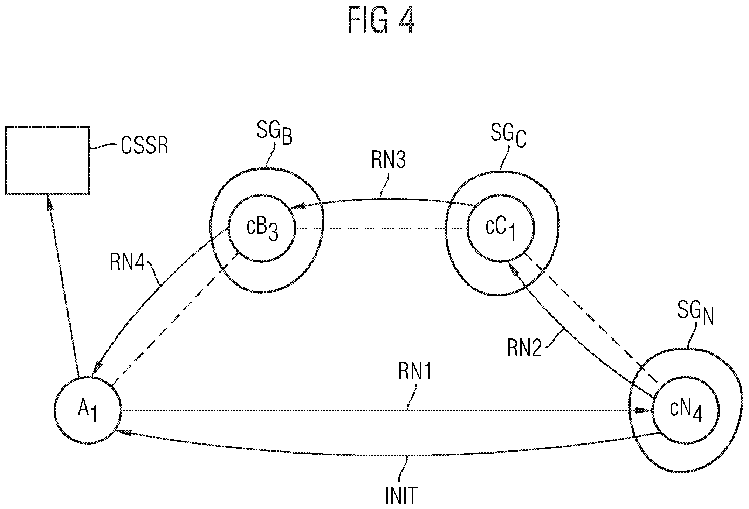

Dies ist in der Figur 4 dargestellt. Der den zusammengesetzten Dienst anfragende Peer A₁ empfängt die Initialisierungsnachricht INIT von dem Peer cN₄. Daraufhin wird eine Ring-Nachricht RN1, RN2, RN3, RN4 versendet. Ein erster Bestandteil der Ring-Nachricht RN1 wird von der den zusammengesetzten Dienst anfragenden Peer-Einrichtung A₁ an die Peer-Einrichtung cN₄ gesendet, welche den ersten Teildienst STN in der durch die ComposedServiceResource festgelegten Reihenfolge auszuführen hat. Diese Peer-Einrichtung cN₄ sendet einen zweiten Teil der Ring-Nachricht RN2 an den koordinierenden bzw. ausführenden Peer cC₁, welche den auf den Teildienst STN folgenden Teildienst STC durchführt. Einen weiteren Teil der Ring-Nachricht RN₃ sendet die Peer-Einrichtung cC₁ an die Peer-Einrichtung cB₃, welche den Teildienst STB durchführt. Schließlich erhält die Peer-Einrichtung A₁ den letzten Teil der Ring-Nachricht RN4 von der Peer-Einrichtung cB₃. Die Ring-Nachricht durchläuft daher im Kreis ausgehend von der anfragenden Peer-Einrichtung A₁ in der Reihenfolge der Abfolge der auszuführenden Teildienste die jeweiligen ausführenden Peer-Einrichtungen cN₄, cC₁, cB₃ und an die anfragende Peer-Einrichtung A₁ zurück.

Jede Peer-Einrichtung liest dabei die Adresse der jeweiligen ausführenden Peer-Einrichtung des folgenden Teildienstes aus der entsprechenden ServiceGroupResource. Beispielsweise liest die Peer-Einrichtung cC₁ die ServiceGroupResource SGR_{B} für die Dienstgruppe SG_{B}. Vorzugsweise hat die Peer-Einrichtung cC₁ dabei die ServiceGroupResource SGR_{B} gezeichnet, sodass sie ständig über Änderungen informiert wird. Somit wird auch berücksichtigt, dass, falls ein ausführender Peer in einer der Dienstgruppen SG_{N}, SG_{C}, SG_{B} ausfällt, ein neu ausführender Peer mit einer neuen Adresse vorliegt. Die Teile der Ringnachricht RN1, RN2, RN3, RN4 starten die Instantiierung des zusammengesetzten Dienstes.

Zur Überwachung der Ausführung des zusammengesetzten Dienstes wird die Ring-Nachricht RN1, RN2, RN3, RN 4 regelmäßig entlang der ausführenden Peer-Einrichtungen versendet. Falls eine Verbindung zwischen Peers unterschiedlicher Dienstgruppen unterbrochen wird oder auch eine gesamte Dienstgruppe ausgefallen ist, wird dies erkannt. Die anfragende Peer-Einrichtung A₁ publiziert dabei eine ComposedServiceStateResource, in der der Betriebszustand und beispielsweise Zwischenergebnisse abgelegt sind.

Falls ein Teildienst vollständig ausfällt, d. h. alle der Gruppe zugehörigen Peer-Einrichtungen ausfallen, kann der zusammengesetzte Dienst in der Regel nicht aufrechterhalten werden und muss abgebrochen werden. Dies wird dann in der ComposedServiceStateResource durch die anfragende Peer-Einrichtung A₁ dokumentiert. Es ist allerdings möglich, dass bestimmte Teildienste als optional gekennzeichnet oder markiert werden. Dies ist in der oben dargestellten beispielhaften XML-Form einer ComposedServiceResource für den Übersetzungsdienst STC der Fall.

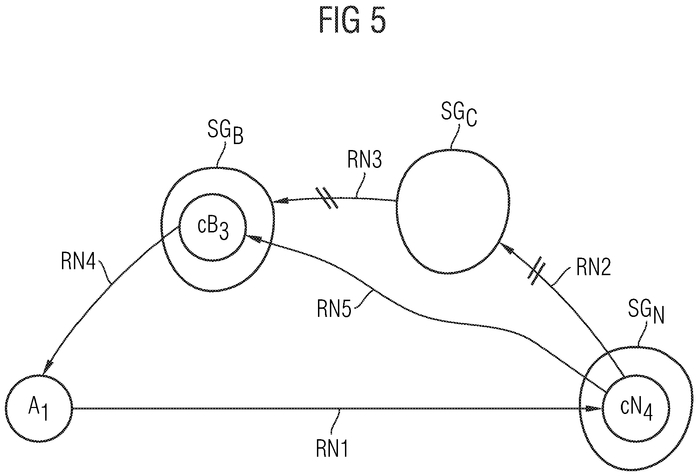

In der Figur 5 ist schematisch eine entsprechende Ausfallsituation dargestellt. Es liegen keine Peer-Einrichtungen mehr im Peer-to-Peer-Netzwerk vor, die den Übersetzungsteildienst STC ausführen können. Somit weist die Dienstgruppe SG_{C} keine Mitglieder mehr auf. Bei der Versendung der Ring-Nachricht entfallen somit die Teilnachrichten RN2 und RN3. Da die Peer-Einrichtung cN₄ die ServiceGroupResource SGRC gezeichnet hat, erkennt die Peer-Einrichtung cN₄, dass die Gruppe ausfällt, da z. B. über ein Verfallintervall keine Aktualisierung mehr erfolgte. Ferner hat die Peer-Einrichtung cN₄ mittels ihrer SubtaskResource STR_{N} Kenntnisse über die Optionalität des Teildienstes STC.

Da in der SubtaskResource STR_{N} ferner die Identifikation der übrigen ServiceGroupResourcen, insbesondere der ServiceGroupResource SGR_{B} für die Dienstgruppe SGB vorhanden sind, kann die Peer-Einrichtung cN₄ eine veränderte Ring-Nachricht RN5 direkt an die Peer-Einrichtung cB₃ senden, sodass ein rudimentärer zusammengesetzter Dienst ohne die automatische Übersetzung weiterhin möglich ist. Der optionale Charakter des Teildienstes STC wird während der schrittweisen Gruppeninitiierung durch die SubtaskResourcen STR_{B}, STR_{C}, STR_{N} weitergereicht. Ähnlich kann bereits bei der Initiierungsphase vorgegangen werden, wenn ein koordinierender Peer feststellt, dass keine publizierten CandidateResourcen vorliegen, die dem angefragten Teildienst entsprechen.

Falls eine letzte Peer-Einrichtung einer Gruppe ausfällt, wird die entsprechende ServiceGroupResource nicht weiter aktualisiert. Daher bietet sich der Einsatz von Verfallsintervallen an, nach denen eine ServiceGroupResource nicht mehr berücksichtig wird und der Ausfall eines gesamten Teildienstes diagnostiziert wird.

Falls eine Dienstgruppe vollständig ausfällt, ist die Abarbeitung bzw. die Ausführung des Teildienstes meist nicht beendet. Falls eine Peer-Einrichtung der entsprechenden Dienstgruppe erneut verfügbar ist, also online geht, versucht diese Peer-Einrichtung, aufgrund der Zustands-Resource, z. B. der ComposedServiceStateResource CSSR, die Abarbeitung wiederaufzunehmen. Daher wird die ComposedServiceStateResource überprüft und es wird festgestellt, ob der zusammengesetzte Dienst insgesamt noch abläuft. Falls dies der Fall ist, erkennt die hinzutretende Peer-Einrichtung, dass es sich bei seiner Dienstgruppe um einen optionalen Teildienst handelt. Ansonsten hätte der zusammengesetzte Dienst beendet werden müssen. Ist die Ausführung des zusammengesetzten Dienstes jedoch eingestellt worden, publiziert die neu hinzutretende Peer-Einrichtung ihren Abarbeitungszustand des Teildienstes beispielsweise durch Überschreiben der ServiceGroupResource auf beendet. Ansonsten nimmt sie die Ausführung des zugewiesenen Teildienstes wieder auf. Dann ist sie als einziger Peer der Dienstgruppe der Koordinator und aktualisiert die ServiceGroupResource regelmäßig. Dadurch wird der ausführende Peer der Vorgängergruppe, welcher die ServiceGroupResource zeichnet, über die Wiederaufnahme des optionalen Teildienstes informiert. Daraufhin ist eine Aktualisierung der Verbindung möglich und ein erneutes Einfügen des Teildienstes, beispielsweise des Dienstes STC möglich. Somit ergibt sich dann auch wieder eine geschlossene Kette durch die Ring-Nachrichten RN2 und RN3.

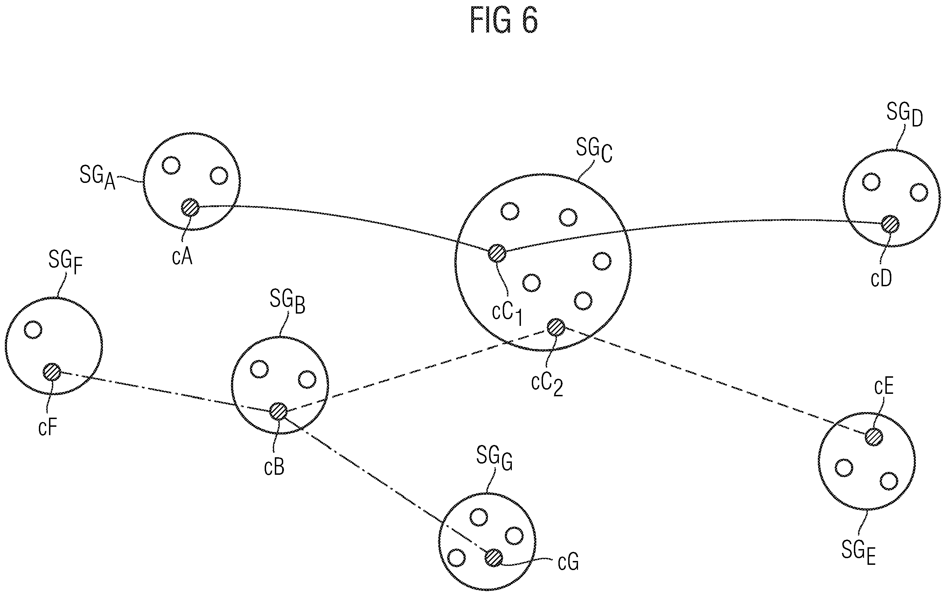

In Figur 6 sind Beispiele der parallelen Nutzung von Peer-Einrichtungen als ausführende Peer-Einrichtungen und die Teilnahme bzw. Ausführung von Teildiensten an mehreren zusammengesetzten Diensten illustriert.

Es sind mehrere Dienstgruppen SG_{A}-SG_{G} dargestellt, die jeweils Peer-Einrichtungen umfassen, die prinzipiell in der Lage sind, einen oder mehrere Teildienste aus den Teildiensten STA-STG auszuführen. Die jeweiligen koordinierenden Peer-Einrichtungen bzw. den jeweiligen Teildienst ausführenden Peer-Einrichtungen cA-cG, cC₁, cC₂ sind durch einen gestrichelten Kreis dargestellt.

Ferner sind drei Dienstverkettungen, also Abfolgen von nacheinander durchzuführenden Teildiensten, durch eine durchgezogene Linie, eine gestrichelte Linie und eine gestrichpunktete Linie angedeutet. Ein erster zusammengesetzter Dienst wird beispielsweise durch die von den Peer-Einrichtungen cA, cC₁ und cD ausgeführten Teildiensten STA, STC und STD bereitgestellt. Eine zweite Verkettung betrifft die Teildienste STB, STC und STE, wobei die Peer-Einrichtungen cB, cC₂ und cE die jeweiligen Teildienste ausführen. Als dritter zusammengesetzter Dienst ist eine Verknüpfung der Teildienste STF, STB und STG angegeben, wobei die Peer-Einrichtungen cF, cB und cG die jeweiligen Teildienste ausführen. Dabei nimmt z. B. die Peer-Einrichtung cB an zwei verschiedenen zusammengesetzten Diensten teil. Dies ist beispielsweise möglich, wenn die Teildienstausführung für den zusammengesetzten Dienst, welcher aus einer Verkettung der Dienste STB, STC und STE besteht, nicht zeitgleich mit der Teildienstausführung des Teildienstes STB für die Verkettung von STF, STB und STG erfolgen muss.

Es ist auch wie hinsichtlich der Dienstgruppe SGC dargestellt ist, möglich, dass in einer Dienstgruppe zwei ausführende Peer-Einrichtungen cC₁ und cC₂ vorliegen, die parallel den Teildienst STC ausführen.

Die Erfindung schafft somit eine absolut dezentrale und ausfallsichere Lösung für die Bereitstellung von zusammengesetzten Diensten aus Teildiensten in einem Peer-to-Peer-Netzwerk. Vorteilhaft werden bei der Zusammenstellung und Bereitstellung des zusammengesetzten Dienstes nicht alle möglichen Verkettungspfade unter allen Peer-Einrichtungen des Netzwerkes hinsichtlich ihrer Dienst- und Benutzeranforderungen verglichen, sondern nur noch diejenigen Peers, die einen vorgegebenen Teildienst ausführen können. Damit reduziert sich die Komplexität der Initiierung des zusammengesetzten Dienstes von einer mindestens exponentiellen Laufzeit eines NP vollständigen Pfadfindungsproblems nur noch auf ein Auswahlproblem innerhalb der jeweiligen Dienstgruppen. Eine Initiierung des zusammengesetzten Dienstes erfolgt dabei verteilt und praktisch ausfallsicher.

Während der Ausführung des zusammengesetzten Dienstes wird jeder Teildienst zu jeder Zeit von einem bestmöglichen Peer ausgeführt. Dabei können die Anforderungen auch an eine Teildienstausführung flexibel für unterschiedliche zusammengesetzte Dienste, veränderliche Nutzeranforderungen und Kontexte bestimmt werden. Somit kann bei Bildung einer entsprechenden SubtaskResource eine dynamische Auswahl der jeweils ausführenden Peer-Einrichtung ausgewählt werden und die jeweilige Rechenlast auf die Peer-Einrichtungen mit den besten Leistungsprofilen für den jeweiligen Teildienst erteilt werden. Bei der Ausführung des zusammengesetzten Dienstes wird jeder Teildienst ausfallsicher ausgeführt, wobei bei einem Ausfall einer ausführenden Peer-Einrichtung mit minimalem Zeitaufwand der jeweilige Abarbeitungszustand des Teildienstes an einen zuvor bestimmten Peer übergeht, der als Watchdog-Peer bezeichnet wurde.

Ferner sind die zusammengesetzten Dienste durch die Angabe der optionalen Teildienste flexibel zusammenstellbar, wobei eine Initiierung des zusammengesetzten Dienstes auch immer dann erfolgreich durchzuführen ist, wenn einzelne optionale Dienste nicht verfügbar sind. Auch beim Ausfallen kompletter optionaler Teildienste kann der zusammengesetzte Dienst noch immer rudimentär durchgeführt und bereitgestellt werden. Falls nach dem Ausfall einer vollständigen Gruppe von Peer-Einrichtungen erneut eine Peer-Einrichtung zur Ausführung des jeweiligen Teildienstes bereitsteht, kann die Abarbeitung des optionalen Teildienstes ohne erneute Initiierung des gesamten zusammengesetzten Dienstes erfolgen.

Obwohl die vorliegende Erfindung anhand bevorzugter Ausführungsbeispiele näher erläutert wurde, ist sie nicht darauf beschränkt, sondern vielfältig modifizierbar. Es können z. B. weitere Dienstverkettungen abweichend von dem Textchat von einem PDA aus erfolgen. Die angegebenen Ressourcen können weitere, den Anforderungen eines zusammengesetzten Dienstes entsprechende Informationen aufweisen. Prinzipiell lässt sich das erfindungsgemäße Verfahren in beliebig ausgestalteten Peer-to-Peer-Netzwerken ausführen. Ein Internet-basiertes Peer-to-Peer-Netzwerk ist lediglich beispielhaft angegeben.

## Patentansprüche

1. Verfahren zum Bereitstellen eines aus Teildiensten (STN, STA, STB, STC) zusammengesetzten Dienstes in einem Peer-Einrichtungen (A₁, B₁-B₅, C₁-C₅, N₁-N₄) aufweisenden Peer-to-Peer-Netzwerk, wobei die Peer-Einrichtungen (A₁, B₁-B₅, C₁-C₅, N₁-N₄) Gruppen (SG_{B}, SG_{C}, SG_{N}) zuordenbar sind, wobei jede Gruppe (SG_{B}, SG_{C}, SG_{N}) durch einen vorgegebenen Teildienst (STB, STC, STN) bestimmt ist,
**dadurch gekennzeichnet, dass**
die Teildienste (STN, STA, STB, STC) verkettet und nacheinander durchzuführen sind, wobei durch jede einer jeweiligen Gruppe (SG_{B}, SG_{C}, SG_{N}) zugeordneten Peer-Einrichtung (B₁-B₅, C₁-C₅, N₁-N₄) der vorgegebene Teildienst (STB, STC, STN) ausführbar ist und eine ausgewählte Peer-Einrichtung (cB₃, cC₁, cN₄) einer Gruppe den jeweiligen Teildienst (STB, STC, STN) ausführt, wobei von einer den zusammengesetzten Dienst anfragenden Peer-Einrichtung (A₁), eine Abfolge von auszuführenden Teildiensten (STN, STC, STB, STA) und Vorgaben an die den jeweiligen Teildienst (STA, STB, STC, STN) auszuführenden Peer-Einrichtungen in dem Peer-to-Peer-Netzwerk publiziert wird und die Auswahl der ausgewählten Peer-Einrichtungen (cB₃, cC₁, cN₄) in Abhängigkeit von der publizierten Abfolge und den publizierten Vorgaben erfolgt, wobei
zum Initialisieren des zusammengesetzten Dienstes die folgenden Verfahrensschritte durchgeführt werden:
a) Publizieren einer ComposedServiceResource (CSR), welche die Abfolge der für die Ausführung des zusammengesetzten Dienstes verwendeten Teildienste, insbesondere Kriterien für die Auswahl der ausführenden Peer-Einrichtungen, eine Verkettung der Teildienste und Ausführungsparameter für die Teildienste, aufweist;
b) Publizieren einer SubtaskResource (STR_{B}) zum Anfragen des in der Abfolge der Teildienste zuletzt auszuführenden Teildienstes (STB) durch die den zusammengesetzten Dienst anfragende Peer-Einrichtung (A₁), wobei eine Identifikation der den Teildienst anfragenden Peer-Einrichtung (A₁) als Übergabe-Peer-Einrichtung für ein Teildienstergebnis von dem angefragten Teildienst (STB) in die SubtaskResource (STR_{B}) geschrieben wird, und Auswählen der Peer-Einrichtung (cB₃) der Gruppe, welche den angefragten Teildienst (STB) auszuführen hat; und
c) Publizieren von weiteren SubtaskResourcen (STR_{C}, STR_{N}) zum Anfragen des jeweils in der Abfolge der Teildienste vorhergehend auszuführenden Teildienstes (STC, STN) durch die ausgewählte Peer-Einrichtung (cB₃, cC₁), welche den in der Abfolge der Teildienste jeweils nachfolgend auszuführenden Teildienst (STB, STC) ausführt, wobei eine Identifikation der den Teildienst anfragenden Peer-Einrichtung (cB₃, cC₁) als Übergabe-Peer-Einrichtung für ein Teildienstergebnis von dem angefragten Teildienst (STB, STC) in die SubtaskResource (STR_{C}, STR_{N}) geschrieben wird, und Auswählen der Peer-Einrichtung (cC₁, cN₄) der Gruppe, welche den angefragten Teildienst (STC, STN) auszuführen hat.

2. Verfahren nach Anspruch 1,
**dadurch gekennzeichnet, dass**
zum Bilden einer Gruppe die folgenden Verfahrensschritte durchgeführt werden:
a) Publizieren einer CandidateResource (CRB₁-CRB₅) durch die Peer-Einrichtungen (B₁-B₅), wobei die CandidateResource (CRB₁-CRB₅) Informationen über die von der jeweiligen publizierenden Peer-Einrichtung (B₁-B₅) ausführbaren Teildienste (STB) und die Leistungsfähigkeit (MEMB) der jeweiligen publizierenden Peer-Einrichtung (B₁-B₅) aufweist;
b) Publizieren einer SubtaskResource (STR_{B}), welche Informationen über mindestens einen der auszuführenden Teildienste (STB) und die zugehörigen Vorgaben aufweist; und
c) Auswählen der ausführenden Peer-Einrichtung (cB₃) aus der Gruppe (SG_{B}) von Peer-Einrichtungen, mittels derer ein vorgegebenen Teildienst (STB) ausführbar ist, in Abhängigkeit von der Leistungsfähigkeit und den publizierten Vorgaben an die den jeweiligen Teildienst ausführenden Peer-Einrichtungen.

3. Verfahren nach Anspruch 2,
**dadurch gekennzeichnet, dass**
mindestens eine Watchdog-Peer-Einrichtung (wB) aus der Gruppe (SG_{B}) von Peer-Einrichtungen bestimmt wird, welche eine Funktion der den jeweiligen Teildienst (STB) ausführenden ausgewählten Peer-Einrichtung (cB₃) überwacht.

4. Verfahren nach Anspruch 3,
**dadurch gekennzeichnet, dass**
die mindestens eine Watchdog-Peer-Einrichtung (wB) das Ausführen des jeweiligen Teildienstes (STB) übernimmt, falls die ausgewählte Peer-Einrichtung (cB) ausfällt.

5. Verfahren nach einem der vorherigen Ansprüche,
**dadurch gekennzeichnet, dass**
eine ServiceGroupResource (SGR_{B}) für eine jeweilige Gruppe publiziert wird, welche Informationen über die aktuelle den Teildienst ausführende ausgewählte Peer-Einrichtung (cB) und/oder die bestimmten Watchdog-Peer-Einrichtungen (wB) aufweist.

6. Verfahren nach Anspruch 5,
**dadurch gekennzeichnet, dass**
die ServiceGroupResource (SGR_{B}) kontinuierlich aktualisiert wird.

7. Verfahren nach einem der vorherigen Ansprüche,
**dadurch gekennzeichnet, dass**
das Publizieren der SubtaskResource (STR), das Auswählen der den jeweiligen Teildienst ausführenden Peer-Einrichtung (cB) und/oder das Bestimmen der Watchdog-Peer-Einrichtungen (wB) durch eine den jeweiligen Teildienst anfragende Peer-Einrichtung (A₁) erfolgt.

8. Verfahren nach einem der vorherigen Ansprüche,
**dadurch gekennzeichnet, dass**
nach dem Auswählen der Peer-Einrichtung (cN₄), welche den in der Abfolge der Teildienste ersten Teildienst (STN) auszuführen hat, eine Initialisierungsnachricht (INIT) an die den zusammengesetzten Dienst anfragende Peer-Einrichtung (A₁) gesendet wird.

9. Verfahren nach einem der vorherigen Ansprüche,
**dadurch gekennzeichnet, dass**
in alle SubtaskResourcen (STR) Informationen über die Anforderungen an die Teildienste, die Verkettung der Teildienste und/oder Identifikatoren der ComposedServiceResourcen (CSR) geschrieben werden.

10. Verfahren nach einem der vorherigen Ansprüche,
**dadurch gekennzeichnet, dass**
durch die den zusammengesetzten Dienst anfragende Peer-Einrichtung (A₁) eine ComposedServiceStateResource (CSSR) publiziert wird, welche einen Betriebszustand der den zusammengesetzten Dienst bildenden Teildienste (STA, STB, STC, STN) und/oder Zwischenergebnisse der Teildienste aufweist.

11. Verfahren nach einem der vorherigen Ansprüche,
**dadurch gekennzeichnet, dass**
nach dem Auswählen aller die jeweiligen Teildienste ausführenden Peer-Einrichtungen (cB₃, cC₁, cN₄) eine Ringnachricht (RN1-RN4) von der den zusammengesetzten Dienst anfragenden Peer-Einrichtung (A₁) an die ausgewählte Peer-Einrichtung (cN₄), welche den in der Abfolge zuerst auszuführenden Teildienst ausführt, und über die die folgenden Teildienste ausführenden Peer-Einrichtungen (cC₁, cB₃) in der Abfolge der auszuführenden Teildienste an die den zusammengesetzten Dienst anfragenden Peer-Einrichtung (A₁) zur Instantiierung der Teildienste zurück gesendet wird.

12. Verfahren nach Anspruch 11,
**dadurch gekennzeichnet, dass**
die Ringnachricht (RN1-RN4) in regelmäßigen Abständen zur Überwachung der Ausführung des zusammengesetzten Dienstes gesendet wird.

13. Verfahren nach Anspruch 11 oder 12,
**dadurch gekennzeichnet, dass**
beim Übertragen der Ringnachricht (RN1-RN4) eine jeweilige ausführende Peer-Einrichtung eine Identifikation der Peer-Einrichtung, welche den in der Abfolge nachfolgenden Teildienst ausführt, durch Auslesen der ServiceGroupRecource (SGR) der jeweiligen durch den nachfolgenden Teildienst bestimmten Gruppe, ermittelt.

14. Verfahren nach einem der vorherigen Ansprüche,
**dadurch gekennzeichnet, dass**
in der ComposedServiceResource (CSR) optionale Teildienste (STC) markiert werden, welche in der Ausführung der Verkettung der Teildienste übersprungen werden können.

15. Verfahren nach Anspruch 14,
**dadurch gekennzeichnet, dass**
ein markierter optionaler Teildienst (STC) in der Abfolge der auszuführenden Teildienste übersprungen wird, falls alle Peer-Einrichtungen (C₁-C₅) der durch den optionalen Teildienst (STC) bestimmten Gruppe (SG_{C}) ausfallen, wobei die ausführende Peer-Einrichtung (cN₄), welche den in der Abfolge vor dem zu überspringenden Teildienst (STC) liegenden Teildienst (STN) ausführt, ihr Teildienstergebnis an die ausführende Peer-Einrichtung (cB₃) übermittelt, welche den in der Abfolge nach dem zu überspringenden Teildienst (STC) liegenden Teildienst (STB) ausführt.

16. Verfahren nach Anspruch 15,
**dadurch gekennzeichnet, dass**
eine ausführende Peer-Einrichtung (cN₄) bei einem Ausfall des ihr folgenden Teildienstes (STC) die ComposedServiceResource (CSRC) liest und eine Identifikation der ServiceGroupResource (SRC) für die Gruppe, welche durch den in der Abfolge übernächsten Teildienst (STB) bestimmt ist, liest.

17. Verfahren nach einem der Ansprüche 5 - 15,
**dadurch gekennzeichnet, dass**
eine jeweilige ausführende Peer-Einrichtung bei einer Änderung der ServiceGroupResource für die durch den in der Abfolge folgenden Teildienst bestimmte Gruppe automatisch benachrichtigt wird.

18. Verfahren nach einem der vorhergehenden Ansprüche,
**dadurch gekennzeichnet, dass**
mindestens eine Peer-Einrichtung mehreren Gruppen zuordenbar ist und als ausführende Peer-Einrichtung verschiedene Teildienste ausführt.

19. Computerprogrammprodukt, welches die Durchführung eines Verfahrens nach einem der Ansprüche 1 - 18 auf einer oder mehreren programmgesteuerten Peer-Einrichtungen veranlasst.

## Claims

1. A method for providing a combined service consisting of partial services (STN, STA, STB, STC) in a peer-to-peer network comprising peer devices (A₁, B₁-B₅, C₁-C₅, N₁-N₄), wherein the peer devices (A₁, B₁-B₅, C₁-C₅, N₁-N₄) can be associated with groups (SG_{B}, SGc, SG_{N}), wherein each group (SG_{B}, SGc, SG_{N}) is determined by a predetermined partial service (STB, STC, STN),
**characterized in that**
the partial services (STN, STA, STB, STC) are to be executed linked and successively, wherein, by means of each peer device (B₁-B₅, C₁-C₅, N₁-N₄) associated with a respective group (SG_{B}, SGc, SG_{N}), the predetermined partial service (STB, STC, STN) can be executed, and a selected peer device (cB₃, cC₁, cN₄) of a group executes the respective partial service (STB, STC, STN), wherein a sequence of partial services (STN, STC, STB, STA) to be executed and specifications to the peer devices which are to execute the respective partial service (STA, STB, STC, STN) are published in the peer-to-peer network by a peer device (A₁) requesting the combined service, and the selection of the selected peer devices (cB₃, cC₁, cN₄) as a function of the published sequence and the published specifications occurs, wherein,
for the initializing of the combined service, the following process steps are carried out:
a) publishing of a ComposedServiceResource (CSR), which comprises the sequence of the partial services used for the execution of the combined service, in particular criteria for the selection of the executing peer devices, a linking of the partial services and execution parameters for the partial services;
b) publishing of a SubtaskResource (STR_{B}) for the requesting of the partial service (STB), to be executed last in the sequence of the partial services, by the peer device (A₁) requesting the combined service, wherein an identification of the peer device (A₁) requesting the partial service, as transfer peer device for a partial service result, is written by the requested partial service (STB) into the SubtaskResource (STR_{B}), and selecting of the peer device (cB₃) of the group which is to execute the requested partial service (STB); and
c) publishing of additional SubtaskResources (STR_{C}, STR_{N}) for requesting the partial service (STC, STN), to be executed in each case in the sequence of the partial services, by the selected peer device (cB₃, cC₁) which executes the partial service (STB, STC) to be executed in each case subsequently in the sequence of the partial services, wherein an identification of the peer device (cB₃, cC₁) requesting the partial service result is written as transfer peer device for a partial service result is written by the requested partial service (STB, STC) into the SubtaskResource (STR_{C}, STR_{N}), and selecting of the peer device (cC₁, cN₄) of the group which is to execute the requested partial service (STC, STN).

2. The method according to Claim 1,
**characterized in that**,
for forming a group, the following process steps are carried out:
a) publishing of a CandidateResource (CRB₁-CRB₅) by the peer devices (B₁-B₅), wherein the CandidateResource (CRB₁-CRB₅) comprises information on the partial services (STB) that can be executed by the respective publishing peer device (B₁-B₅), and the performance capacity (MEMB) of the respective publishing peer device (B₁-B₅);
b) publishing of a SubtaskResource (STR_{B}), which comprises information on at least one of the partial services (STB) to be executed and the associated specifications; and
c) selecting of the executing peer device (cB₃) from the group (SG_{B}) of peer devices, by means of which a predetermined partial service (STB) can be executed, as a function of a performance capacity and the published specifications to the peer devices executing the respective partial service.

3. The method according to Claim 2,
**characterized in that**
at least one watchdog peer device (wB) is determined from the group (SG_{B}) of peer devices, which monitors a function of the selected peer device (cB₃) executing the respective partial service (STB).

4. The method according to Claim 3,
**characterized in that**
at least one watchdog peer device (wB) takes over the execution of the respective partial service (STB), if the selected peer device (cB) fails.

5. The method according to any of the preceding claims,
**characterized in that**
a ServiceGroupResource (SGR_{B}) for a respective group is published, which ServiceGroupResource comprises information on the current selected peer device (cB) executing the partial service and/or the determined watchdog peer devices (wB).

6. The method according to Claim 5,
**characterized in that**
the ServiceGroupResource (SGR_{B}) is updated continuously.

7. The method according to any of the preceding claims,
**characterized in that**
the publishing of the SubtaskResource (STR), the selecting of the peer device (cB) executing the respective partial service and/or the determining of the watchdog peer devices (wB) is carried out by a peer device (A₁) requesting the respective partial service.

8. The method according to any of the preceding claims,
**characterized in that**
after the selecting of the peer device (cN₄), which is to execute the first partial service (STN) of the sequence of the partial services, an initialization message (INIT) is sent to the peer device (A₁) requesting the combined service.

9. The method according to any of the preceding claims,
**characterized in that**,
into all the SubtaskResources (STR), information on the requests to the partial services, the linking of the partial service and/or identifiers of the ComposedServiceResources (CSR) is written.

10. The method according to any of the preceding claims,
**characterized in that**
a ComposedServiceStateResource (CSSR), which comprises an operating state of the partial services (STA, STB, STC, STN) forming the combined service, and/or intermediate results of the partial services, is published by the peer device (A₁) requesting the combined service.

11. The method according to any of the preceding claims,
**characterized in that**,
after the selecting of all the peer devices (cB₃, cC₁, cN₄) executing the respective partial service, a ring message (RN1-RN4) is sent by the peer device (A₁) requesting the combined service to the selected peer device (cN₄), which executes the partial service to be executed first in the sequence, and via the peer devices (cC₁, cB₃) executing the subsequent partial services, in the sequence of the partial services to be executed, back to the peer device (A₁) requesting the combined service for the instantiation of the partial services.

12. The method according to Claim 11,
**characterized in that**
the ring message (RN1-RN4) is sent at regular intervals for monitoring the execution of the combined service.

13. The method according to Claim 11 or 12,
**characterized in that**,
when the ring message (RN1-RN4) is transmitted, a respective executing peer device executes an identification of the peer device, which executes the subsequent partial service in the sequence, by reading out the ServiceGroupResource (SGR) of the respective group determined by the subsequent partial service.

14. The method according to any of the preceding claims,
**characterized in that**,
in the ComposedServiceResource (CSR), optional partial services (STC) are marked, which can be skipped in the execution of the linking of the partial services.

15. The method according to Claim 14,
**characterized in that**
a marked optional partial service (STC) is skipped in the sequence of the partial services to be executed, if all the peer devices (C₁-C₅) of the group (SG_{C}) determined by the optional partial service (STC) fail, wherein the executing peer device (cN₄), which executes the partial service (STN) located in the sequence before the partial service (STC) to be skipped, transmits the partial service result thereof to the executing peer device (cB₃), which executes the partial service (STB) located in the sequence after the partial service (STC) to be skipped.

16. The method according to Claim 15,
**characterized in that**
an executing peer device (cN₄), in the case of the failure of the partial service (STC) following it, reads the ComposedServiceResource (CSRC), and reads an identification of the ServiceGroupResource (SRC) for the group which is determined by the next but one partial service (STB) in the sequence.

17. The method according to any one of Claims 5-15,
**characterized in that**,
in the case of a change of the ServiceGroupResource, a respective executing peer device is automatically notified by the group determined by the next partial service in the sequence.

18. The method according to any of the preceding claims,
**characterized in that**
at least one peer device can be associated with several groups and, as executing peer device, it executes different partial services.

19. A computer program product, which triggers the execution of a method according to any one of Claims 1-18 on one or more program-controlled peer devices.

## Revendications

1. Procédé pour fournir un service combiné à partir de sous-services (STN, STA, STB, STC) dans un réseau poste à poste comprenant des dispositifs homologues (A₁, B₁-B₅, C₁-C₅, N₁-N₄), dans lequel les dispositifs homologues (A₁, B₁-B₅, C₁-C₅, N₁-N₄) peuvent être attribués à des groupes (SG_{B}, SG_{C}, SG_{N}), dans lequel chaque groupe (SG_{B}, SG_{C}, SG_{N}) est déterminé par un sous-service prédéfini (STB, STC, STN),
**caractérisé en ce que**
les sous-services (STN, STA, STB, STC) sont enchaînés et mis en oeuvre les uns après les autres, dans lequel le sous-service prédéfini (STB, STC, STN) peut être exécuté par chaque dispositif homologue (B₁-B₅, C₁-C₅, N₁-N₄) attribué à un groupe respectif (SG_{B}, SG_{C}, SG_{N}) et un dispositif homologue sélectionné (cB₃, cC₁, cN₄) d'un groupe exécute le sous-service respectif (STB, STC, STN), dans lequel un dispositif homologue (A₁) demandant le service combiné publie une séquence de sous-services à exécuter (STN, STC, STB, STA) et de spécifications aux dispositifs homologues exécutant le sous-service respectif (STA, STB, STC, STN) dans le réseau poste à poste et la sélection des dispositifs homologues sélectionnés (cB₃, cC₁, cN₄) est effectuée en fonction de la séquence publiée et des spécifications publiées, dans lequel
pour l'initialisation du service combiné, les étapes de procédé suivantes sont mises en oeuvre :
a) la publication d'une ressource de service combiné (CSR), qui comprend la séquence des sous-services employés pour l'exécution du service combiné, en particulier des critères pour la sélection des dispositifs homologues exécutant, un enchaînement des sous-services et des paramètres d'exécution pour les sous-services ;
b) la publication d'une ressource de sous-tâche (STR_{B}) pour la demande du sous-service (STB), à exécuter en dernier dans la séquence des sous-services, par les dispositifs homologues (A₁) demandant le service combiné, dans lequel une identification des dispositifs homologues (A₁) demandant le sous-service en tant que dispositif homologue de remise pour un résultat de sous-service est décrite par le sous-service demandé (STB) dans la ressource de sous-tâche (STR_{B}), et la sélection du dispositif homologue (cB₃) du groupe qui doit exécuter le sous-service demandé (STB) ; et
c) la publication d'autres ressources de sous-tâche (STR_{C}, STR_{N}) pour la demande du sous-service respectif (STC, STN), à exécuter auparavant dans la séquence des sous-services, par le dispositif homologue (cB₃, cC₁) sélectionné, qui exécute le sous-service respectif (STB, STC) à exécuter par la suite dans la séquence des sous-services, dans lequel une identification des dispositifs homologues (cB₃, cC₁) demandant le sous-service en tant que dispositif homologue de remise pour un résultat de sous-service est décrite par le sous-service demandant (STB, STC) dans la ressource de sous-tâche (STR_{C}, STR_{N}), et la sélection du dispositif homologue (cC₁, cN₄) du groupe qui doit exécuter le sous-service demandé (STC, STN).

2. Procédé selon la revendication 1,
**caractérisé en ce que**
pour la formation d'un groupe, les étapes de procédé suivantes sont mises en oeuvre :
a) la publication d'une ressource candidate (CRB₁-CRB₅) par les dispositifs homologues (B₁-B₅), dans lequel la ressource candidate (CRB₁-CRB₅) comprend des informations sur les sous-services (STB) exécutables par le dispositif homologue respectif publiant (B₁-B₅) et la performance (MEMB) du dispositif homologue respectif publiant (B₁-B₅) ;
b) la publication d'une ressource de sous-tâche (STR_{B}) qui comprend des informations sur au moins un des sous-services à exécuter (STB) et sur les spécifications associées ; et
c) la sélection du dispositif homologue exécutant (cB₃) parmi le groupe (SG_{B}) de dispositifs homologues, au moyen duquel un sous-service prédéfini (STB) est exécutable, en fonction de la performance et des spécifications publiées aux dispositifs homologues exécutant le sous-service respectif.

3. Procédé selon la revendication 2,
**caractérisé en ce**
**qu'**au moins un dispositif homologue chien de garde (wB) est déterminé parmi le groupe (SG_{B}) de dispositifs homologues, lequel surveille une fonction des dispositifs homologues (cB₃) sélectionnés exécutant le sous-service respectif (STB).

4. Procédé selon la revendication 3,
**caractérisé en ce**
**que** l'au moins un dispositif homologue chien de garde (wB) se charge de l'exécution du sous-service respectif (STB) si le dispositif homologue sélectionné (cB) est indisponible.

5. Procédé selon l'une quelconque des revendications précédentes,
**caractérisé en ce**
**qu'**une ressource de groupe de services (SGR_{B}) est publiée pour un groupe respectif, laquelle comprend des informations sur le dispositif homologue actuel (cB) sélectionné exécutant le sous-service et/ou les dispositifs homologues chiens de garde déterminés (wB).

6. Procédé selon la revendication 5,
**caractérisé en ce que**
la ressource de groupe de services (SGR_{B}) est actualisée en permanence.

7. Procédé selon l'une quelconque des revendications précédentes,
**caractérisé en ce que**
la publication de la ressource de sous-tâche (STR), la sélection du dispositif homologue (cB) exécutant le sous-service respectif et/ou la détermination des dispositifs homologues chiens de garde (wB) sont effectuées par un dispositif homologue (A₁) demandant le sous-service respectif.

8. Procédé selon l'une quelconque des revendications précédentes,
**caractérisé en ce**
**qu'**après la sélection du dispositif homologue (cN₄) qui doit exécuter le premier sous-service (STN) dans la séquence des sous-services, un message d'initialisation (INIT) est envoyé au dispositif homologue (A₁) demandant le service combiné.

9. Procédé selon l'une quelconque des revendications précédentes,
**caractérisé en ce que**
dans toutes les ressources de sous-tâche (STR) sont décrites des informations sur les exigences aux sous-services, sur l'enchaînement des sous-services et/ou des identificateurs des ressources de service combiné (CSR).

10. Procédé selon l'une quelconque des revendications précédentes,
**caractérisé en ce que**
le dispositif homologue (A₁) demandant le service combiné publie une ressource d'état de service combiné (CSSR) qui comprend un état de fonctionnement des sous-services (STA, STB, STC, STN) formant le service combiné et/ou des résultats intermédiaires des sous-services.

11. Procédé selon l'une quelconque des revendications précédentes,
**caractérisé en ce**
**qu'**après la sélection de tous les dispositifs homologues (cB₃, cC₁, cN₄) exécutant les sous-services respectifs, un message circulaire (RN1-RN4) est renvoyé par le dispositif homologue (A₁) demandant le service combiné au dispositif homologue sélectionné (cN₄) qui exécute le sous-service à exécuter d'abord dans la séquence et, par le biais des dispositifs homologues (cC₁, cB₃) exécutant les sous-services suivants dans la séquence des sous-services à exécuter, au dispositif homologue (A₁) demandant le service combiné pour l'instanciation des sous-services.

12. Procédé selon la revendication 11,
**caractérisé en ce que**
le message circulaire (RN1-RN4) est envoyé à des intervalles réguliers pour la surveillance de l'exécution du service combiné.

13. Procédé selon la revendication 11 ou 12,
**caractérisé en ce que**
lors de la transmission du message circulaire (RN1-RN4), un dispositif homologue exécutant respectif détermine une identification du dispositif homologue, qui exécute le sous-service suivant dans la séquence, par la lecture de la ressource de groupe de services (SGR) du groupe respectif déterminé par le sous-service suivant.

14. Procédé selon l'une quelconque des revendications précédentes,
**caractérisé en ce que**
dans la ressource de service combiné (CSR) sont marqués des sous-services optionnels (STC) qui peuvent être sautés dans l'exécution de l'enchaînement des sous-services.

15. Procédé selon la revendication 14,
**caractérisé en ce**
**qu'**un sous-service optionnel marqué (STC) est sauté dans la séquence des sous-services à exécuter si tous les dispositifs homologues (C₁-C₅) du groupe déterminé (SG_{C}) par les sous-services optionnels (STC) sont indisponibles, dans lequel le dispositif homologue exécutant (cN₄), qui exécute le sous-service (STN) situé dans la séquence avant le sous-service à sauter (STC), transmet son résultat de sous-service au dispositif homologue exécutant (cB₃) qui exécute le sous-service (STB) situé dans la séquence après le sous-service à sauter (STC).

16. Procédé selon la revendication 15,
**caractérisé en ce**
**qu'**un dispositif homologue exécutant (cN₄) lit, en cas d'indisponibilité du sous-service (STC) le suivant, la ressource de service combiné (CSRC) et lit une identification de la ressource de groupe de services (SRC) pour le groupe qui est déterminé par le sous-service (STB) après le prochain sous-service dans la séquence.

17. Procédé selon l'une quelconque des revendications 5 à 15,
**caractérisé en ce**
**qu'**un dispositif homologue exécutant respectif, en cas de modification de la ressource de groupe de services pour le groupe déterminé par le sous-service suivant dans la séquence, est informé automatiquement.

18. Procédé selon l'une quelconque des revendications précédentes,
**caractérisé en ce**
**qu'**au moins un dispositif homologue peut être attribué à plusieurs groupes et exécute, en tant que dispositif homologue exécutant, différents sous-services.

19. Produit-programme d'ordinateur, qui provoque la mise en oeuvre d'un procédé selon l'une quelconque des revendications 1 à 18 sur un ou plusieurs dispositifs homologues commandés par programme.
